# EUROPÄISCHE PATENTSCHRIFT

(11) **EP 1 578 098 B1**
(45) Veröffentlichungstag und Bekanntmachung des Hinweises auf die Patenterteilung: **30.03.2016**
(21) Anmeldenummer: 05001879.5
(22) Anmeldetag: 29.01.2005
(51) Int. Cl.: H04M 3/42

(54) **Präsentation von personalisierter Information bei einem Rufaufbau**
Presentation of personalised information during call establishment
Présentation d'information personalisée pendant l'etablissement d'un appel

(30) Priorität: 16.03.2004 DE 102004013861
(43) Veröffentlichungstag der Anmeldung: 21.09.2005
(73) Patentinhaber: Deutsche Telekom AG, 53113 Bonn (DE)
(72) Erfinder: Eckert, Martin, Dipl.-Ing., 12527 Berlin (DE); Hardt, Detlef, Dr., 30451 Hannover (DE); Trinkel, Marian, Dipl.-Ing., 52372 Kreuzau OT Untermaubach (DE); Daussmann, Frank, 67454 Hassloch (DE)
(74) Vertreter: Blumbach Zinngrebe

(56) Entgegenhaltungen:
- EP-A- 0 973 309
- WO-A-03/015380
- WO-A-03/071820

## Beschreibung

Die Erfindung betrifft ein Verfahren sowie ein System zum Bereitstellen einer personalisierten Anzeigeinformation bei der Telekommunikationsanbahnung zwischen wenigstens zwei Telekommunikationsendeinrichtungen.

Die Anzeigeinformation einer Telekommunikationsanbahnung bzw. eines Rufaufbaus zwischen zwei Telekommunikationsendeinrichtungen erfolgt herkömmlicherweise durch ein an die rufende Telekommunikationsendeinrichtung des Anrufers als Frei- oder Besetztzeichen und/oder durch ein an die gerufene Telekommunikationsendeinrichtung des Angerufenen als Rufzeichen übermitteltes Klingelzeichen bzw. Signalton oder -folge.

Die Übermittlung eines Rufzeichens erfolgt hierbei herkömmlicherweise durch Übermittlung eines Steuer- oder Signalisierungssignals auf einem Steuer- oder Signalisierungskanal an die gerufene Telekommunikationsendeinrichtung durch eine zentrale oder auch dezentrale Einheit eines beim Rufaufbau beteiligten Telekommunkationsnetzes, z.B. einer Vermittlungsstelle im Falle eines Festnetzes, wodurch ein akustisches, der jeweiligen gerufenen Telekommunikationsendeinrichtung zugeordnetes Signalgerät, wie beispielsweise ein Wecker oder eine Klingel, angesteuert wird. Bei neueren Telekommunikationsendeinrichtungen, wie beispielsweise auch schnurlosen Telekommunikationsendeinrichtungen, kann der jeweilige Signalton bzw. das Klingelzeichen häufig mittels in der Telekommunikationsendeinrichtung implementierter Sofware ausgewählt bzw. verändert werden oder kann auch mittels einer beispielsweise über einen Provider abrufbaren Software individuell verändert werden kann.

Die Übermittlung eines Frei- oder Besetztzeichen an die rufende Telekommunikationsendeinrichtung erfolgt üblicherweise mittels eines auf einen Nutzkanal, z.B. Sprachkanal, gelegten Signaltons.

Das europäische Patent EP 0 813 787 B1 betrifft ein Telefongerät mit anruferabhängigem Rufsignal. Das gerufene Telefongerät weist Mittel auf, zum Erzeugen eines Rufsignaltons in Abhängigkeit von durch das gerufene Telefongerät empfangener Signalisierungsinformation in Bezug auf die Identität des Rufenden. Im gerufenen Telefongerät wird somit ein personalisiertes, anruferbezogenes Klingelzeichen basierend auf dem Anrufer zugeordneter Signalisierungsinformation erzeugt. So kann beispielsweise in Abhängigkeit jeder Ziffer einer empfangenen Rufteilnehmernummer ein bestimmter Ton am gerufenen ein- und in Folge dargestellt werden. Ferner kann im gerufenen Telefongerät ein bestimmter Ton auch bestimmten rufenden Teilnehmernummern oder einer bestimmten Gruppe von rufenden Teilnehmernummern zugeordnet werden. Das Ruf- oder Signalzeichen an dem gerufenen Telefongerät kann auch in Form der Anzeige des unter einer Rufnummer gespeicherten Namen des rufenden Teilnehmers angezeigt oder in Form eines Sprachsignals ausgegeben werden.

Die entsprechende Vorauswahl und Aktivierung einer bestimmten Rufanzeigeinformation ist hierbei jeweils direkt an das gerufene Telefongerät gebunden.

Die Offenlegungsschrift DE 100 52 932 A1 beschreibt ein Verfahren zur Auswahl eines den Verbindungswunsch eines anwählenden Telekommunikationsgerätes mit einem angewählten Telekommunikationsgerät signalisierenden Rufsignals, wobei das Rufsignal durch den das gerufene Telekommunikationsgerät Rufenden bestimmt wird. Das Rufsignal ist entweder im anwählenden Telekommunikationsgerät gespeichert und wird von diesem zusammen mit einem den Verbindungsaufbau einleitenden Datensatz an das angewählte Telekommunikationsgerät übertragen. Zur Entlastung des Speichers beim anwählenden Telekommunikationsgerät ist ferner vorgesehen, ein vom Anwählenden bestimmtes Rufsignal nach entsprechender Übertragung im angewählten Telekommunikationsgerät oder auf dem Server des Netzbetreibers zu speichern, so dass nachfolgend vom anwählenden Telekommunikationsgerät ein den Verbindungsaufbau einleitender Datensatz mit einer Identifizierung, die dem Rufsignal als Adressierung eindeutig zugeordnet ist, an das angewählte Telekommunikationsgerät bzw. an den Server übertragen wird, woraufhin das bestimmte Rufsignal am angewählten Telekommunikationsgerät aktiviert bzw. vom Server an das angewählte Telekommunikationsgerät übertragen wird.

Die entsprechende Vorauswahl, Übertragung und Aktivierung einer bestimmten Rufanzeigeinformation ist hierbei jeweils direkt an das anwählende Telefongerät gebunden.

Ein ähnliches Verfahren beschreibt ferner die Offenlegungsschrift DE 100 23 474 A1, bei welchem beim Aussenden eines Rufes von einem Ruf-Kommunikationsgerät mindestens ein, ein Erkennungszeichen beschreibendes Erkennungssignal zu dem angerufenen Kommunikationsgerät übertragen und von dem angerufenen Kommunikationsegerät auf das Erkennungssignal hin das Erkennungszeichen ausgegeben wird.

Bei beiden vorgenannten Schriften ist ferner von Nachteil, dass die Rufanzeigeinformation auf das jeweils angerufene Gerät zur Anzeige abgestimmt sein muss.

Die Patentschrift DE 44 16 384 C2 beschreibt ein Verfahren zur akustischen Identifizierung eines Telefonanrufers, bei welchem anstatt des Klingelsignals die Telefonnummer des Anrufers akustisch codiert als Tonfolge über den Lautsprecher des gerufenen Telefons wiedergegeben wird.

Auch bei diesem Verfahren sind die Steuerung und Umsetzungsmechanismen unmittelbar in einer Endeinrichtung integriert.

Aufgabe der Erfindung ist es, einen weiteren Weg aufzuzeigen, das Bereitstellen einer personalisierten Anzeigeinformation beim Rufaufbau zwischen wenigstens zwei - Telekommunikationsendeinrichtungen zu gewährleisten, insbesondere im Wesentlichen unabhängig von jeweils verwendeten Telekommunikationsendeinrichtungen.

Für die nachfolgende Beschreibung einschließlich der Ansprüche sei grundsätzlich darauf hingewiesen, dass der Begriff "Telekommunikationsendeinrichtung" nachfolgend der Einfachheit halber als Endeinrichtung bezeichnet wird und ohne weitere Spezifizierung im Wesentlichen jede zur Sprach- und/oder Datenübertragung über ein Telekommunikationsnetz geeignete Endeinrichtung umfasst, also insbesondere schnurgebundene und schnurlose Telefone, einem Festnetz oder Mobilfunknetz zugeordnete Telefone aber auch Faxgeräte, PDAs (Personal Digital Assistant), MDAs (Multimedia Digital Assistant) einschließlich WAP (Wireless Access Protocol) fähige Endeinrichtung und Rechner mit entsprechender Software.

Die erfindungsgemäße Lösung ist auf höchst überraschende Weise bereits durch einen Gegenstand mit den Merkmalen eines der unabhängigen Ansprüche gegeben.

Vorteilhafte und/oder bevorzugte Ausführungsformen und Weiterbildungen sind Gegenstand der abhängigen Ansprüche.

Die Erfindung sieht somit zum Bereitstellen einer personalisierten Anzeigeinformation an wenigstens einer Endeinrichtung bei einem Rufaufbau zwischen wenigstens zwei Endeinrichtungen vor, dass einer, einer ersten Endeinrichtung zuordenbaren Identifizierungsinformation in einer, durch ein intelligentes Netz, welches wenigstens mit dem Telekommunikationsnetz der ersten Endeinrichtung in Verbindung steht, zugreifbaren ersten Datenbank eine wenigstens einer zweiten Endeinrichtung zuordenbare Identifizierungsinformation zugeordnet wird und in Abhängigkeit dieser Zuordnung in der ersten oder einer weiteren durch das intelligente Netz zugreifbaren Datenbank wenigstens eine Anzeigeinformation gespeichert wird, dass beim Einleiten eines Rufaufbaus zwischen wenigstens zwei Endeinrichtungen unter Ansprechen auf die Identifizierungsinformation der ersten Endeinrichtung durch das intelligente Netz die Identifizierungsinformation der wenigstens einen weiteren Endeinrichtung mit der in der Datenbank zugeordneten Identifizierungsinformation der wenigstens einen zweiten Endeinrichtung verglichen wird und unter Ansprechen auf eine Zuordnungsübereinstimmung die in Abhängigkeit der Zuordnung gespeicherte Anzeigeinformation abgerufen und entsprechend der Zuordnung an wenigstens eine der weiteren Endeinrichtungen weitergeleitet wird.

Ein wesentlicher Vorteil hierbei ist, dass das Speichern, Aktivieren und Weiterleiten einer personalisierten Anzeigeinformation erstmalig im Wesentlichen unabhängig der jeweiligen Endeinrichtung gewährleistet ist, eine personalisierte Anzeigeinformation also insbesondere unabhängig von den Typen, Speicherkapazitäten und/oder Funktionalitäten der jeweiligen Endeinrichtungen und somit z.B. auch auf Endeinrichtungen, die einem jeweiligen aktuellen Standard nicht mehr entsprechen, anwendbar ist.

Für die Zuordnung der Identifizierungsinformation von ersten und zweiten Endeinrichtungen und/oder die Auswahl einer Anzeigeinformation wird somit zweckmäßigerweise ein System bereitgestellt, welches eine von einer Endeinrichtung über ein Telekommunikationsnetz zugreifbare Nutzerschnittstelle umfasst und mit wenigstens einem intelligenten Netz, welches mit dem Telekommunikationsnetz der ersten Endeinrichtung in Verbindung steht, und wenigstens einer, durch das intelligente Netz zugreifbaren Datenbank zum Zuordnen einer Identifizierungsinformation der wenigstens einen zweiten Endeinrichtung zu einer Identifizierungsinformation der ersten Endeinrichtung und zum Speichern wenigstens einer Anzeigeinformation in Abhängigkeit der Zuordnung zusammenwirkt, derart, dass das intelligtente Netz beim Einleiten eines Rufaufbaus zwischen wenigstens zwei Endeinrichtungen unter Ansprechen auf die Identifizierungsinformation der ersten Endeinrichtung das Vergleichen der Identifizierungsinformation der wenigstens einen weiteren Endeinrichtung mit der zugeordneten Identifizierungsinformation der wenigstens einen zweiten Endeinrichtung bewirkt und unter Ansprechen auf eine Zuordnungsübereinstimmung das Abrufen der in Abhängigkeit der Zuordnung gespeicherten Anzeigeinformation und deren Weiterleitung entsprechend der Zuordnung an wenigstens eine der weiteren Endeinrichtung bewirkt.

Insbesondere, wenn hierbei die Endeinrichtung, mittels welcher über die Nutzerschnittstelle zugegriffen wird, nicht der ersten Endeinrichtung entspricht, in Zuordnung und Abhängigkeit welcher die personalisierte Anzeigeinformation bereit gestellt werden soll, so ist darüber hinaus vorgesehen, eine weitere Identifizierungs- und/oder Authentifizierungsprozedur applikationsspezifisch zur Berechtigung der Bereitstellung durchzuführen. Hierzu ist insbesondere vorgesehen, auf eine Information betreffend den jeweiligen Nutzeranschluss oder registrierten Teilnehmer zuzugreifen, z.B. durch entsprechende Eingabe über die Nutzschnittstelle oder durch Auslesen von in der Identifizierungsinformation eingebetteten und/oder in einer zugreifbaren Datenbank gespeicherten Angaben mittels einer von dem System umfassten Verifikationseinrichtung.

Gemäß einer Ausführungsform der Erfindung ist vorgesehen, dass die Identifizierungsinformation der wenigstens einen zweiten Endeinrichtung als Identifizierungsinformation einer gerufenen Endeinrichtung der Identifizierungsinformation der ersten Endeinrichtung als rufende Endeinrichtung zugeordnet wird und folglich die wenigstens eine von der Zuordnung abhängige Anzeigeinformation als Anzeigeinformation für die wenigstens eine zweite als gerufene Endeinrichtung gespeichert wird.

Ergänzend und/oder alternativ ermöglicht die Erfindung darüber hinaus, dass die Identifizierungsinformation der wenigstens einen zweiten Endeinrichtung als Identifizierungsinformation einer rufenden Endeinrichtung der Identifizierungsinformation der ersten Endeinrichtung als gerufene Endeinrichtung zugeordnet wird und folglich die wenigstens eine von der Zuordnung abhängige Anzeigeinformation als Anzeigeinformation für die wenigstens eine zweite als rufende Endeinrichtung gespeichert wird.

Somit ist für im Wesentlichen jede Endeinrichtung und unabhängig von dieser wenigstens eine individuelle Rufinformation bereitstellbar, die jeweils einer bestimmten gerufenen zweiten Endeinrichtung, eine Gruppe von gerufenen zweiten Endeinrichtungen oder auch jeder von der Endeinrichtung gerufenen zweiten Endeinrichtung beim Rufaufbau angezeigt wird. Ebenso ist für im Wesentlichen jede Endeinrichtung und unabhängig von dieser wenigstens eine individuelle Frei- und/oder Besetztinformation bereitstellbar, die jeweils einer bestimmten rufenden zweiten Endeinrichtung, eine Gruppe von rufenden zweiten Endeinrichtungen oder auch jeder die Endeinrichtung rufenden zweiten Endeinrichtung beim Rufaufbau angezeigt wird.

Da insbesondere anhand der jeweiligen Identifizierungsinformation, beispielsweise basierend auf einer CLI (Call Line Identification), einer IP-Adresse oder einem HLR (Home Location Register) eine im Wesentlichen vollständige Erkennung der jeweiligen Endeinrichtungstypen bereits heute gegeben ist, ist zweckmäßigerweise ferner vorgesehen, dass ein Zusammenwirken des intelligenten Netzes mit einer intelligenten Peripherie des Netzes derart gesteuert wird, dass vor Speicherung oder Weiterleitung der die erste Endeinrichtung personalisierenden Frei-, Besetzt- und/oder Rufinformation eine Verifikation der Anzeigefunktionalität und gegebenenfalls eine jeweils entsprechend angepasste Umsetzung und/oder Codierung der Anzeigeinformation durchgeführt wird.

Insbesondere bei, auf einem aktuellen Stand der Technik basierten Endeinrichtungen ist es ferner vorgesehen, die Anzeigeinformation beispielsweise in Form eines Softwaredatensatzes an die jeweilige zweite Endeinrichtung weiterzuleiten und eine in der Hardware und/oder in dem Speicher vorimplementierte Anzeigeinformation zur Anzeige der personalisierten Anzeigeinformation entsprechend zu adaptieren.

Folglich ist eine Vielzahl von bereitstellbaren individuellen Anzeigeinformationen gegeben, beispielsweise von Tönen, Bildern, Ton-, Sprach- und/oder Bildsequenzen, SMS- und/oder Email basierten Informationen. Auch ist folglich von bestimmten Endeinrichtungen auf einfachste Weise eine Massenalarmierung gewährleistbar.

Eine solche Massenalarmierung kann z.B. im Fall einer zumindest einen Teil der Bevölkerung betreffenden Gefahrensituation vorgesehen sein. Zur gezielten Warnung oder Informationsversorgung betroffener Bevölkerungsteile, Einwohner eines Bezirks oder einer Region können beispielsweise die Anschlüsse von entsprechend den Bevölkerungsteilen, dem Bezirk oder der Region zugeordneten Endeinrichtungen jeweils über deren individuelle Netzkennungen angewählt und je nach vorliegender Situation eine individuell bereitgestellte Anzeigeinformation übermittelt werden. Eine, insbesondere zur lückenlosen Benachrichtigung vorgesehene, Massenalarmierung kann folglich bevorzugt von hierzu bestimmten Einrichtungen der Staatsgewalt oder von Rettungsstellen ausgelöst werden.

Zweckmäßigerweise ist das erfindungsgemäße System ferner derart ausgebildet, in Abhängigkeit der Zuordnung einen sogenannten "Trigger Detection Point" bzw. TDP beim Netzanschluss der die Anzeigeinformation personalisierende ersten Endeinrichtung zu setzen, bevorzugt derart, dass je nach gesetztem Trigger Detection Point eine dem Telekommunikationsnetz der ersten Endeinrichtung zugeordnete Vermittlungseinheit bei Rufaufbau von der oder zu der ersten Endeinrichtung darauf anspricht und eine Anfrage an das intelligente Netz bewirkt. Bei Übereinstimmen der gespeicherten Zuordnung wird im Falle der zweiten Endeinrichtung als rufende Endeinrichtung ein Übertragungskanal der zweiten Endeinrichtung für den Empfang der gespeicherten individuellen Anzeigeinformation an der zweiten Endeinrichtung und/oder im Falle der zweiten Endeinrichtung als gerufene Endeinrichtung ein Übertragungskanal dieser für die Weiterleitung der Anzeigeinformation an die zweite Endeinrichtung an eine mit der jeweiligen Datenbank, in welcher die, die erste Endeinrichtung personalisierende Anzeigeinformation gespeichert ist, zusammenwirkende intelligente Peripherie umgeleitet.

Insbesondere ist vorgesehen, bei einer rufenden zweiten Endeinrichtung den Nutzkanal als Übertragungskanal zu verwenden, wohingegen bei einer gerufenen zweiten Endeinrichtung insbesondere ein den Rufaufbau einleitender Signalisierungs- oder Steuerkanal entsprechend umgeleitet wird. Die Verwendung von Signalisierungs-, Steuerkanälen oder Nutzkanälen zur Übertragung bzw. Weiterleitung der Anzeigeinformation kann jedoch auch umgekehrt erfolgen. Applikationsspezifisch, bspw. in Abhängigkeit einer jeweiligen Netzauslastung, kann zur Weiterleitung einer Anzeigeinformation auch eine gemeinsame bzw. abwechselnde Verwendung von Signalisierungs- und Nutzkanälen vorgesehen werden.

Ferner sieht die Erfindung in zweckmäßiger Weiterbildung darüber hinaus bevorzugt die Einbindung einer sprachgeführten und/oder einer graphischen Nutzerschnittstelle zur vereinfachten Zuordnung und Auswahl einer jeweiligen Endeinrichtung und/oder einer individueller Anzeigeinformation vor. Von Vorteil ist ferner, wenn die Nutzerschnittstelle dem Teilnehmer den Zugang zu einem Portal eröffnet, über welches aus auswählbaren Listen bereits vordefinierte Anzeigeinformationen, akustische einschließlich sprachbasierte und/oder optische einschließlich bildbasierte Informationen, je nach verwendeter Endeinrichtung auswählbar und/oder je nach individuell zusammenstellbar und abspeicherbar sind. Bevorzugt wird über ein solches Portal ferner der Zugriff auf Listen zur individuellen Auswahl und/oder Zuordnung bestimmter Teilnehmeranschlüsse bereitgestellt. Das Portal ist hierzu in vorteilhafter Weise mit dem Internet verbunden und/oder weist eine mit dem Internet verbundene Nutzerschnittstelle auf.

In besonders bevorzugter Weiterbildung ist ferner vorgesehen, dass in Abhängigkeit der Anzeigeinformation, der Identfizierungsinformation der ersten Endeinrichtung und/oder der Identfizierungsinformation der wenigstens einen zweiten Endeinrichtung einen der ersten Endeinrichtung zuordenbaren Rechnungsdatensatz zur weiteren Verarbeitung, insbesondere Rechnungslegung durch wenigstens eine mit dem System in Verbindung stehende Verarbeitungseinheit zu generieren.

Die von dem erfindungsgemäßen System zum Zusammenwirken angesteuerten Einheiten zur Durchführung des erfindungsgemäßen Verfahrens, insbesondere das intelligente Netz des Telekommunikationsnetz der ersten Endeinrichtung, die Datenbanken und intelligenten Peripherien können hierbei applikationsspezifisch, insbesondere Telekommunikationsnetz-spezifisch, in jeder Vermittlungseinheit angeordnet sein oder dezentral, über eine zentrale Logik miteinander verbunden, angeordnet sein.

Weitere Vorteile und Merkmale der Erfindung ergeben sich aus der nachfolgenden detaillierteren Beschreibung einiger bevorzugter Ausführungsbeispiele unter Bezugnahme auf die beigefügten Zeichnungen.

In den Zeichnungen zeigen:
- Fig. 1: ein Flußdiagramm, in dem ein bevorzugter Ablauf einer durch einen Nutzer der Erfindung über eine Nutzerschnittstelle bewirkten Initialisierung der Bereitstellung einer personalisierten Anzeigeinformation mit für die Erfindung wesentlichen Schritten dargestellt ist,
- Fig. 2: eine Prinzipskizze betreffend die Anbindung des erfindungsgemäßen Systems an ein bestehendes Telekommunikationsnetz, und
- Fig. 3: eine schematische Prinzipskizze betreffend Wirkzusammenhänge einzelner, an der Durchführung des erfindungsgemäßen Verfahrens beteiligter Einheiten.

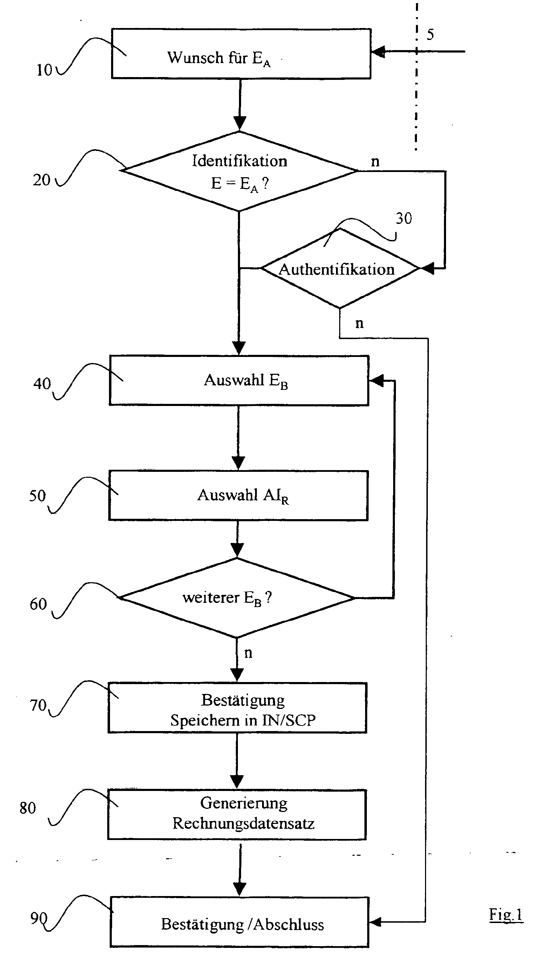

Nachfolgend wird zunächst auf Fig. 1 Bezug genommen, wobei für die detaillierte, beispielhafte Beschreibung grundsätzlich angenommen sei, dass ein Nutzer N_{A} eine Endeinrichtung E_{A} besitzt, welche einem spezifischen Nutzeranschluss eines Heimat-Telekommunikationsnetzes T_{A} zugeordnet ist und basierend auf welcher die Bereitstellung einer personalisierten Anzeigeinformation für eine entsprechende Anzeige an einer Endeinrichtung E_{B} eines Teilnehmers B des gleichen oder eines anderen Telekommunikationsnetzes durchzuführen ist. Es sei darauf hingewiesen, dass auch das Heimat-Telekommunikationsnetz im Wesentlichen jegliche Arten von Kommunikationsnetzen umfassen und z.B. als Zentralnetz oder als dezentrales Netz, als öffentliches oder lokales Netz ausgebildet sein kann.

Angenommen sei ferner, die Endeinrichtung E_{A} erzeugt bei einer angewählten Endeinrichtung E_{B} einen Klingelton A in Abhängigkeit der angewählten Endeinrichtung E_{B}, der Nutzer N_{A} möchte jedoch einen individuellen Rufton AI_{R} in Abhängigkeit der jeweils angewählten Endeinrichtung E_{B} haben.

Der Nutzer N_{A} wählt sich (Fig. 1, Bezugszeichen 5) mit einer Endeinrichtung mittels einer entsprechenden Rufnummer über eine Nutzerschnittstelle in ein erfindungsgemäß bereitgestelltes Portal ein und gibt dort diesen Wunsch für seine Endeinrichtung E_{A} an (Fig. 1, Bezugszeichen 10).

Bei Einwahl in das Portal oder ggf. auch erst zu einem späterem Zeitpunkt, spätestens jedoch bei Bestätigung der gewünschten Leistung, erfolgt eine Identifizierung 20 der Endeinrichtung, z.B. über die CLI, welche bei Rufaufbau mit übertragen wird, als Endeinrichtung E_{A}. Entspricht die Endeinrichtung nicht der Eineinrichtung E_{A}, so kann mittels einer spezifischen Authentifizierungsroutine 30 die Berechtigung der Eineinrichtung E_{A} geprüft werden.

Bei erfolgter Identifikation oder Authenthifizierung bietet das Portal dem Nutzer A je nach verwendeter Nutzerschnittstelle ein applikationsspezifisches Auswahlmenü bereit, beispielsweise mittels eines sprachgesteuerten Computers.

Der Nutzer A wählt einen gewünschten Teilnehmers B z.B. durch Tasten- oder Spracheingabe der Rufnummer der Endeinrichtung E_{B} (Fig. 1, Bezugszeichen 40) des Teilnehmers B, und definiert die Endeinrichtung E_{B} als zu rufende.

Anschließend wählt der Nutzer A einen individuellen Rufton AI_{R}, z.B. aus einer gegebenen Liste 50, aus, welcher bei der Endeinrichtung E_{B} bei Anwahl durch die Eineinrichtung E_{A} angezeigt werden soll.

Sollen weitere Endeinrichtungen der Endeinrichtung E_{A} für eine individuelle Anzeigeinformation zugeordnet werden (Fig. 1, Bezugszeichen 60) werden die Schritte entsprechend wiederholt. Möchte der Nutzer A, dass ein von ihm ausgewählter Rufton AI_{R} für alle gerufenen Teilnehmer gilt, so erfolgt dies z.B. durch Bestimmung der gerufenen Endeinrichtung B als unbestimmte Endeinrichtung B.

Die Zuordnung(en) einschließlich gewünschter Anzeigeinformation, also im vorliegenden Fall des gewählten Ruftons AI_{R}, wird unter Ansprechen auf eine Bestätigung 70 des Nutzers A über das Portal an das Netz T_{A} der Endeinrichtung E_{A} übertragen und einer Stelle im intelligenten Netz des Netzes T_{A}, beispielsweise in einem dafür vorgesehenen Service-Steuerungspunktes, einem sogenannten SCP (Service Control Point), welcher Teil einer Vermittlungseinheit Netzes T_{A} sein kann, gespeichert.

In einem nächsten Schritt erfolgt die Generierung 80 eines dem Nutzer A oder dem Nutzanschluss der Endeinrichtung E_{A} zugeordneten Datensatzes zur Rechnungslegung, z.B basierend auf der CLI des Nutzers A, und der gewählten Leistung.

Nach nochmaliger Bestätigung 90 durch den Nutzer A ist der Vorgang abgeschlossen, und der Nutzer A verlässt das Portal oder kann gegebenfalls eine weitere Leistung des Portal in Anspruch nehmen.

Im vorliegenden Fall hat somit der Nutzer A, wenn er mit seiner Endeinrichtung E_{A} den von ihm bestimmten Teilnehmer B, die von ihm bestimmte Gruppe von Teilnehmern B oder auch beliebige Teilnehmer B anruft, den von ihm ausgewählten Klingelton AI_{R} an der jeweiligen Endeinrichtung E_{B} des oder der gerufenen Teilnehmer B. Hierzu ist beispielsweise folgende Umsetzung möglich.

Ruft der Nutzer A die Rufnummer der Endeinrichtung E_{B} an, erkennt zunächst das intelligente Netz des Heimat-Telekommunikationsnetzes T_{A} des Nutzers A anhand der CLI der Endeinrichtung E_{A}, dass ggf. eine gewisse Anzeigeinformation weitergeleitet werden soll. Das intelligente Netz vergleicht daraufhin die gerufene CLI mit den unter der CLI der Endeinrichtung E_{A} gespeicherten CLIs und stellt im vorliegenden Fall fest, dass zur Rufnummer der Endeinrichtung E_{B} der spezifische Rufton AI_{R} weitergeleitet werden soll.

Ist der spezifische Rufton AI_{R} beispielsweise in Form eines Softwaredatensatzes gespeichert, bewirkt das intelligente Netz das Auslesen des entsprechenden Softwaredatensatzes und sendet den Softwaredatensatz über den Steuerkanal zum Nutzeranschluss der Endeinrichtung E_{B}. Der Softwaredatensatz legt sich daraufhin in die Hardware bzw. den Speicher der Endeinrichtung E_{B} rein, wird dort aktiviert und stellt die Konfiguration der Klingeltöne an der Endeinrichtung E_{B} entsprechend zur Aktivierung der vom Nutzer A ausgewählten individuellen Rufanzeigeinformation AI_{R} um. Dem Teilnehmer B wird somit über seine Endeinrichtung E_{B} nicht ein vom Teilnehmer B eingestellte Klingelton, sondern der vom Nutzer A vorgewählte individuellen Rufton AI_{R} angezeigt.

Es sei darauf hingewiesen, dass anstelle eines einfachen Klingeltons auch eine Tonfolge, Frequenzspektren, Text- und/oder Bilder oder -folgen auswähbar sind. Die Auswahl der personalisierten Rufanzeigeinformation z.B. davon ab, über welchen Typ von Endeinrichtung der Nutzer A auf welche Nutzerschnittstelle und/oder welches Portal zugreifen kann.

Applikationsspezifisch können somit auch SMS-Nachrichten oder sprachbasierte Nachrichten ausgewählt werden. Da ferner die Möglichkeit der Anzeige einer individuellen Anzeigeinformation an einer Endeinrichtung vom Typ dieser Endeinrichtung abhängig sein kann, ist bevorzugt vorgesehen, dass dem intelligenten Netz eine intelligente Peripherie zugeordnet ist, welches anhand der CLI oder einer anderen Identifizierungsinformation der Endeinrichtung, an welcher die individuelle Anzeigeinformation angezeigt werden soll, die Anzeigeinformation entsprechend einer Anzeigefunktionalität dieser Endeinrichtung geeignet umsetzt und/oder codiert. Ist beispielsweise die ausgewählte Anzeigeinformation eine SMS-basierte und die ausgewählte Endeinrichtung ein Fax-Einrichtung, so wird der SMS-Datensatz entsprechend dem Protokoll für ein Fax-Gerät umgesetzt. Andererseits ermöglicht die Erfindung, dass eine SMS-Nachricht beispielsweise in einem Datensatz konvertiert wird, welcher an der ausgewählten Endeinrichtung das Ausgeben einer entsprechenden Sprachnachricht bewirkt.

Eine derartige Anpassung oder ein entsprechender Hinweis hierzu kann ferner bereits bei dem gemäß Fig. 1 beschriebenen Ablauf integriert sein.

Auch eine Massenalarmierung beispielsweise mittels einer dem Katastrophenschutz zugeordneten rufenden Endeinrichtung E_{A} ist somit auf einfache Weise realisierbar, indem ein Rundruf zu einer beliebigen Anzahl von Endeinrichtungen E_{B} gestartet wird und für diesen Fall eine zweckmäßigerweise nur einmal vergebbare, individuelle Anzeigeinformation vorbestimmt worden ist, so dass jeder gerufene Teilnehmer sich sofort bewusst ist, dass eine Ausnahmesituation vorliegt.

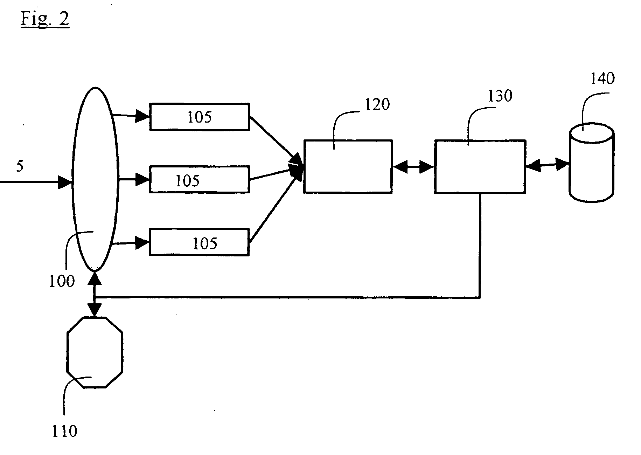

Fig. 2 zeigt ein schematisches Blockdiagramm betreffend eine bevorzugte Anbindung des vorstehend beschriebenen erfindungsgemäßen Systems an ein bestehendes Telekommunikationsnetz.

Dargestellt ist ein Telekommunikationsnetz 100, beispielsweise ein Festnetz, welches jedoch selbstverständlich auch ein Mobilfunknetz oder das Internet sein kann. Mit dem Netz 100 sind verschiedene Typen von Schnittstellen 105 je nach Typ der Endeinrichtung vorgesehen, über welche die Personalisierung einer Anzeigeinformation vorgenommen wird, wobei die Schnittstellen wiederum einem Portal 120 zugeordnet sind. Ein Nutzer erhält somit nach entsprechender Einwahl 5 über das Netz 100 mittels eine der Nutzerschnittstellen 105 Zugang zu dem Portal 120. Ferner ist dem Portal 120 eine zentrale Steuerung 130 zu- oder nachgeordnet, welches zweckmäßigerweise einen bidirektionalen Austausch von Informationen zwischen der zentralen Steuerung 130 und dem Portal 120 ermöglicht und darüber hinaus einen bidirektionalen Austausch zu wenigstens einer Datenbank 140. Ferner ist die zentrale Steuerung 130 direkt oder indirekt mit dem Telekommunikationsnetz 100 verbunden, um letztendlich das Zusammenwirken aller bei der Durchführung des erfindungsgemäßen Verfahrens beteiligten Einheiten zu ermöglichen. Beispielsweise kann somit über die zentrale Steuerung auch die vorstehend beschriebene Authentifikationroutine erfolgen und/oder über das Netz 100 eine Anfrage an ein anderes Telekommunikationsnetz bewirken.

Je nach der für den Zugang 5 verwendeter Endeinrichtung, der Endeinrichtung, für welche eine Anzeigeinformation bereitgestellt werden soll und/oder der Endeinrichtung, an welcher die eine Anzeigeinformation angezeigt werden soll, kann somit auf jeweilige Identifizierungsinformation zugegriffen, zugeordnet und gespeichert werden. Als Identifizierungsinformation dienen somit z.B eine CLI, eine IP-Adresse, IMEI/IMSI (International Mobile Equipment Identity/International Mobile Subscriber Identity) und/oder eine Information aus einem heimatnetzbezogenen Register, beispielsweise einem HLR im Falle einer GSM-basierten Mobilfunkendeinrichtung.

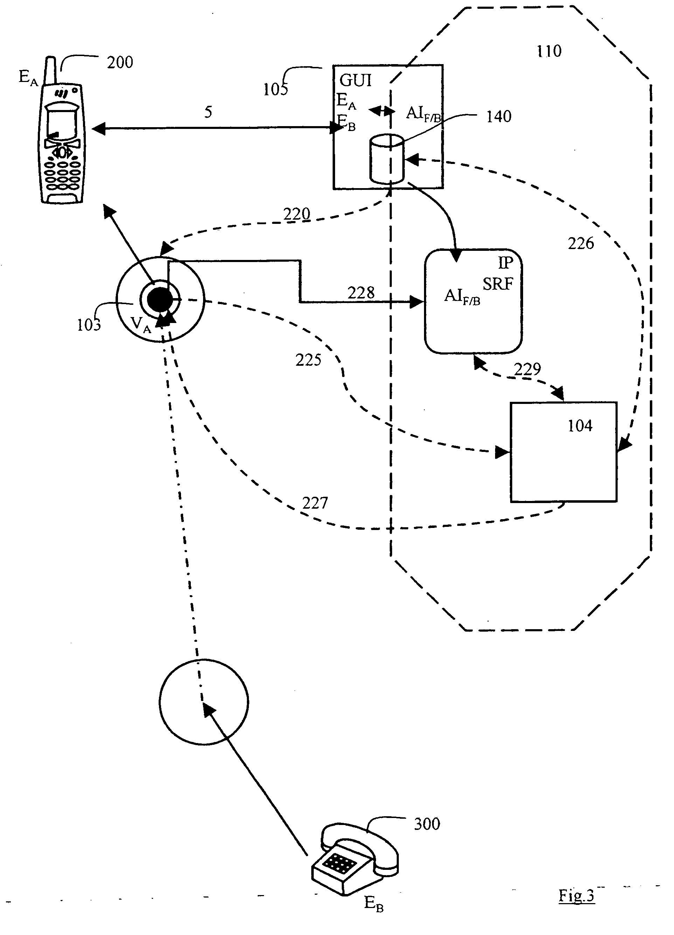

Mit der erfindungsgemäßen, netzbasierten individuellen Bereitstellung einer, einer Endeinrichtung E_{A} zugeordneten Anzeigeinformation ist jedoch nicht nur eine personalisierte Anzeigeinformation einer rufenden Endeinrichtung E_{A} an einer gerufenen Endeinrichtung E_{B} durchführbar, sondern ferner die Weiterleitung einer personalisierten Anzeigeinformation einer gerufenen Endeinrichtung E_{A} an eine rufende Endeinrichtung E_{B}, welches beispielhaft anhand der Figur 3 näher beschrieben wird.

Es sei jedoch vorab darauf hingewiesen, dass die nachfolgend mit Fig. 3 aufgezeigten Wirkzusammenhänge in entsprechender Abwandlung im Wesentlichen auch für die personalisierte Anzeige einer rufenden Endeinrichtung E_{A} an einer gerufenen Endeinrichtung E_{B} einsetzbar sind.

Gemäß Fig. 3 gibt (Fig. 3; Bezugszeichen 5) ein Nutzer A über seine Endeinrichtung 200, E_{A} einen als individuelle Frei-/Besetzanzeigeinfomation AI_{R/B} bestimmten Content über eine mit dem intelligenten Netz 110 direkt oder indirekt in Verbindung stehende graphische Nutzerschnittstelle 105, GUI entweder durch Auswahl aus entsprechenden, über die Nutzerschnittstelle 105 abrufbaren Listen oder beispielsweise durch "Uploaden" eines in seiner Endeinrichtung E_{A} gespeicherten Contents AI_{R/B} ein und ordnet hierfür seiner Endeinrichtung 200, E_{A} die Identifizierungsinformation von Endeinrichtungen 300, E_{B} bestimmter ausgewählter Anrufer. Selbstverständlich ist hierfür auch ein gemäß Fig. 1 beschriebenes Vorgehen geeignet.

Die Identifizierungsinformationen, deren Zuordnung und die Abhängigkeiten werden gemäß Fig. 3 in einer ersten, der Nutzerschnittstelle 105 und/oder einem der Nutzerschnittstelle zugeordnetem Portal zugeordneten Datenbank 140 abgelegt. Der über die Endeinrichtung E_{A} ausgewählte individuelle Content AI_{R/B} wird bei einer intelligenten Peripherie IP des intelligenten Netz 110 als Datenfiles, beispielsweise innerhalb einer sogenannten spezialisierten Resourcenfunktionseinheit SRF (Special Resource Function) abgelegt. Ferner wird über das intelligente Netz 110 für den Nutzeranschluss des Teilnehmers A, also insbesondere in einer Vermittlungsstelle 103, V_{A} seines Heimat-Telekommunikationsnetzes ein TDP, ein Trigger Detection Point, bevorzugt bereits bezogen auf ein individuelles Frei- und/oder Besetztzeichen, gesetzt, bei Fig. 3 mit dem mit 220 gekennzeichneten gestrichelten Pfeil angezeigt.

Wird bei einem Rufaufbau ein solcher Detection Point überquert, werden die Trigger-Bedingungen ausgewertet und ggf. Aktionen ausgeführt. Herkömmlicherweise werden zur Ausführungen von Trigger-Bedingungen basierten Aktionen in der Vermittlungsstelle Nachrichten an entsprechende Komponenten des intelligenten Netzes verschickt, welche die entsprechende Aktion daraufhin ausführen.

Im vorliegenden Fall soll somit beispielsweise ein individuelles Freizeichen einer oder mehreren oder auch allen rufenden Endeinrichtung(en) 300, E_{B} angezeigt werden.

Wird von der Endeinrichtung 300, E_{B} ein Ruf zu der Endeinrichtung 200, E_{A} aufgebaut, so wird der Rufaufbau über eine erste, dem Teilnehmer B zugeordnete Vermittlungsstelle V_{B} bis hin zu der dem Nutzeranschluss der Endeinrichtung 200, E_{A} entsprechend zugehörigen Vermittlungsstelle 103, V_{A} eingeleitet. Die Vermittlungsstelle 103, V_{A} spricht auf den Trigger Detection Point an und übermittelt eine Anfrage an eine Logikeinheit 104 des intelligente Netzes 110, bei Fig. 3 mit dem mit 225 gekennzeichneten gestrichelten Pfeil angezeigt, ob eine bestimmte Aktion, also im vorliegenden Fall die Rückübertragung eines individuellen Frei- bzw. Besetztzeichen je nach Zustand der Endeinrichtung 200, E_{A} an die Endrichtung 300, E_{B} ausgeführt werden soll. Die Logik 104 des intelligenten Netzes 110 verifiziert daraufhin die Endeinrichtung 300, E_{B} als eine der Endeinrichtung 200, E_{A} entsprechend zugeordnete, bei Fig. 3 der gestrichelte Pfeil 226, und weist in einem nächsten Schritt, bei Fig. 3 der gestrichelte Pfeil 227, die Vermittlungsstelle 103, V_{A} an, den Sprachkanal der Endeinrichtung 300, E_{B} auf den entsprechenden Eingangsport der intelligenten Peripherie IP zu legen, bei Fig. 3 der Pfeil 228, bei welcher die für die Endeinrichtung 300, E_{B} bestimmte individuelle rückzuleitende Anzeigeinformation AI_{R/B} hinterlegt ist. Parallel hierzu wird von der Vermittlungsstelle 103, V_{A} Richtung Endeinrichtung 200, E_{A} das Rufzeichen angelegt.

Das Rufzeichen kann hierbei auch eine der Endeinrichtung 300, E_{B}, zuvor individuell zugeordenete Anzeigeinformation sein.

Ist die Endeinrichtung 200, E_{A} besetzt, wird dies der intelligenten Logik 104 in entsprechender Weise von der Vermittungsstelle 103, V_{A} mitgeteilt, die daraufhin die intelligente Peripherie IP anweist, die individuelle Besetztinformation abzuspielen. Ist die Endeinrichtung 200, E_{A} frei, weist die intelligente Netz-Logik 104 entsprechend die intelligente Peripherie IP an, die hinterlegte individuelle Freiinformation abzuspielen.

Die Anweisung der Netz-Logik 104 an die Vermittungsstelle 103, V_{A} kann in Abwandlung beispielsweise auch beinhalten, erst unter Ansprechen auf ein Frei- oder Besetztzeichen den Sprachkanal der Endeinrichtung 300, E_{B} bereits auf einen Eingangsport der intelligenten Peripherie IP zu legen, so dass unmittelbar das richtige File übertragen wird. Ist nicht zwischen Frei- und Besetztinformation unterschieden, kann die individuelle Anzeigeinformation auch sofort rückübertragen werden.

Will der Teilnehmer A das Gespräch annehmen und nimmt den Hörer, wird dies dem intelligenten Netz über die Vermittlungsstelle 103, V_{A} entsprechend angezeigt, woraufhin die Netz-Logik 104 den Befehl Rufaufbau vervollständigt (Call-complete) ausgibt, woraufhin die Verbindung zur intelligenten Peripherie IP abgelöst und die Verbindung zwischen den Endeinrichtungen 200, E_{A} und 300, E_{B} hergestellt wird.
Die hierbei bei der beispielhaften Beschreibung eines erfindungsgemäßen Verfahrens beteiligten Funktionalitäten können sowohl in jeder Vermittlungseinheit, also im vorliegenden Fall in jeder Vermittlungsstelle, angeordnet sein oder auch zentral mit ggf. dezentral anschaltbaren Komponenten.

Die Erfindung ermöglicht folglich eine vorwärts gerichtete personalisierte individuelle Anzeigeinformation, also von einer bestimmten rufenden Endeinrichtung zu einer oder mehreren gerufenen Endeinrichtung und/oder eine rückwärts gerichtete personalisierte individuelle Anzeigeinformation, also basierend auf einer bestimmten gerufenen Endeinrichtung zu einer oder mehreren rufenden Endeinrichtungen.

## Patentansprüche

1. Verfahren zum Bereitstellen einer personalisierten Anzeigeinformation (AI; AI_{R}, AI_{F/B}) an wenigstens einer Endeinrichtung bei einem Rufaufbau zwischen wenigstens zwei Endeinrichtungen,
wobei die Anzeigeinformation akustische und/oder optische Informationen umfasst, und
wobei einer einer ersten Endeinrichtung (200, E_{A}) zugeordneten Identifizierungsinformation in einer durch ein intelligentes Netz (110) des Telekommunikationsnetzes der ersten Endeinrichtung (200, E_{A}) zugreifbaren Datenbank (140) die Identifizierungsinformation wenigstens einer zweiten Endeinrichtung (300, E_{B}) zugeordnet wird, und
in Abhängigkeit der Zuordnung in einer durch das intelligente Netz (110) des Telekommunikationsnetzes der ersten Endeinrichtung (200, E_{A}) zugreifbaren intelligenten Peripherie (140, IP) eine Anzeigeinformation (AI; AI_{R}, AI_{F/B}) als Datenfile gespeichert wird, wobei
beim Einleiten eines Rufaufbaus zwischen wenigstens zwei Endeinrichtungen unter Ansprechen auf die Identifizierungsinformation der ersten Endeinrichtung (200, E_{A}) durch das intelligentes Netz (110) des Telekommunikationsnetzes der ersten Endeinrichtung (200, E_{A}) die Identifizierungsinformation der wenigstens einen weiteren Endeinrichtung mit der in der Datenbank zugeordneten Identifizierungsinformation der wenigstens einen zweiten Endeinrichtung (300, E_{B}) verglichen wird, und
unter Ansprechen auf eine Zuordnungsübereinstimmung die in Abhängigkeit der Zuordnung gespeicherte Anzeigeinformation (AI; AI_{R}, AI_{F/B}) aus der intelligenten Peripherie abgerufen und entsprechend der Zuordnung an wenigstens eine der weiteren Endeinrichtungen (300, E_{B}) weitergeleitet wird,
**dadurch gekennzeichnet, dass**
das intelligente Netz mit der intelligenten Peripherie des Netzes so gesteuert wird, dass vor Speicherung oder Weiterleitung der Anzeigeinformation (AI; AI_{R}, AI_{F/B}) der Endeinrichtungstyp der Endeinrichtung an den die Anzeigeinformation weitergeleitet werden soll mittels der Identifizierungsinformation dieser Endeinrichtung erkannt wird und, dass in Abhängigkeit der Anzeigefunktionalität des Endeinrichtungstyps die Anzeigeinformation entsprechend umgesetzt und/oder codiert wird.

2. Verfahren nach vorstehendem Anspruch, ferner **dadurch gekennzeichnet, dass**
die Identifizierungsinformation der zweiten Endeinrichtung (300, E_{B}) als Identifizierungsinformation einer gerufenen Endeinrichtung der Identifizierungsinformation der ersten Endeinrichtung (200, E_{A}) als rufende Endeinrichtung in der ersten Datenbank (140) zugeordnet wird und
die wenigstens eine von der Zuordnung abhängige Anzeigeinformation (AI; AI_{R}, AI_{F/B}) als Anzeigeinformation (AI_{R}) für die zweite als gerufene Endeinrichtung gespeichert wird.

3. Verfahren nach einem der vorstehenden Ansprüche, ferner **dadurch gekennzeichnet, dass**
die Identifizierungsinformation der zweiten Endeinrichtung (300, E_{B}) als Identifizierungsinformation einer rufenden Endeinrichtung der Identifizierungsinformation der ersten Endeinrichtung (200, E_{A}) als gerufene Endeinrichtung in der ersten Datenbank zugeordnet wird und
die wenigstens eine von der Zuordnung abhängige Anzeigeinformation (AI; AI_{R}, AI_{F/B}) als Anzeigeinformation (AI_{F/B}) für die zweite als rufende Endeinrichtung gespeichert wird.

4. Verfahren nach einem der vorstehenden Ansprüche, ferner **dadurch gekennzeichnet, dass**
in Abhängigkeit der Zuordnung ein TDP für den Nutzanschluss der ersten Endeinrichtung (200, E_{A}) gesetzt wird.

5. Verfahren nach vorstehendem Anspruch, ferner **dadurch gekennzeichnet, dass**
unter Ansprechen auf das gesetzte TDP von einer Vermittlungseinheit (103, V_{A}) des Telekommunikationsnetzes ein Übertragungskanal der zweiten Endeinrichtung (300, E_{B}) für die Weiterleitung der Anzeigeinformation (AI; AI_{R}, AI_{F/B}) an die zweite Endeinrichtung (300, E_{B}) an die Intelligente Peripherie des intelligenten Netzes (110) umgeleitet wird.

6. Verfahren nach einem der vorstehenden Ansprüche, ferner **dadurch gekennzeichnet, dass**
für die Zuordnung der ersten und zweiten Endeinrichtung (200, E_{A}, 300, E_{B}) und/oder für die Auswahl von Anzeigeinformation eine mit dem intelligent Netz (110) in Verbindung stehende Nutzerschnittstelle (105) verwendet wird.

7. Verfahren nach vorstehendem Anspruch, ferner **dadurch gekennzeichnet, dass**
über die Nutzerschnittstelle (105) der Zugang zu einem Anwendungssportal (120) zur Zuordnung und Auswahl von Endeinrichtungen und Anzeigeinformationen bereitgestellt wird.

8. Verfahren nach einem der vorstehenden Ansprüche, ferner **dadurch gekennzeichnet, dass**
vor der Speicherung von Identifizierungsinformation und Anzeigeinformation (AI; AI_{R}, AL_{F/B}) eine Identifizierung und/oder Authentifizierung in Bezug auf die erste Endeinrichtung, (200, E_{A},) durchgeführt wird.

9. Verfahren nach einem der vorstehenden Ansprüche, ferner **dadurch gekennzeichnet, dass**
die Anzeigeinformation (AI; AI_{R}, AI_{F/B}) in Form von Software an die jeweilige zweite Endeinrichtung (300, E_{B}) weitergeleitet wird und die Hardware und/oder den Speicher der jeweils zweiten Endeinrichtung (300, E_{B}) zur Anzeige der Anzeigeinformation (AI; AI_{R}, AI_{F/B}) entsprechend adaptiert.

10. Verfahren nach einem der vorstehenden Ansprüche, ferner **dadurch gekennzeichnet, dass**
in Abhängigkeit der Anzeigeinformation (AI; AI_{R}, AI_{F/B}), der Identifizierungsinformation der ersten Endeinrichtung (200, E_{A}) und/oder der Identifizierungsinformation der zweiten Endeinrichtung (300, E_{B}) ein der ersten Endeinrichtung (200, E_{A}) zuordenbarer Datensatz zur weiteren Verarbeitung, insbesondere Rechnungslegung, generiert wird.

11. System zum Bereitstellen einer personalisierten Anzeigeinformation (AI; AI_{R}, AI_{F/B}), die akustische und/oder optische Informationen umfasst, an wenigstens einer Endeinrichtung bei einem Rufaufbau zwischen wenigstens zwei Endeinrichtungen, mit wenigstens einer über eine Endeinrichtung zugreifbaren Nutzerschnittstelle (105) zu einer Datenbank (140), welches
mit wenigstens einem, einem Telekommunikationsnetz (100) zugeordneten intelligenten Netz (110) und der Datenbank (140) derart zusammenwirkt, dass
einer einer ersten Endeinrichtung, (200, E_{A}) des Telekommunikationsnetzes (100) zugeordneten Identifizierungsinformation die Identifizierungsinformation wenigstens einer zweiten Endeinrichtung (300, E_{B}) zuordenbar ist, und
wobei in Abhängigkeit der Zuordnung in einer durch das intelligentes Netz (110) des Telekommunikationsnetzes der ersten Endeinrichtung (200, E_{A}) zugreifbaren intelligenten Peripherie (140, IP) eine Anzeigeinformation (AI; AI_{R},AI_{F/B}) als Datenfile speicherbar ist, derart, dass
das intelligente Netz (110) beim Einleiten eines Rufaufbaus zwischen wenigstens zwei Endeinrichtungen unter Ansprechen auf die Identifizierungsinformation der ersten Endeinrichtung (200, E_{A}) das Vergleichen der Identifizierungsinformation der wenigstens einen weiteren Endeinrichtung mit der zugeordneten Identifizierungsinformation der wenigstens einen zweiten Endeinrichtung (300, E_{B}) bewirkt und
unter Ansprechen auf eine Zuordnungsübereinstimmung das Abrufen der in Abhängigkeit der Zuordnung gespeicherten Anzeigeinformation (AI; AI_{R}, AI_{F/B}) aus intelligenten Peripherie und deren Weiterleiten entsprechend der Zuordnung an wenigstens eine der weiteren Endeinrichtungen (300, E_{B}) bewirkt,
**dadurch gekennzeichnet, dass**
die intelligente Peripherie ausgebildet und mit dem intelligenten Netz steuerbar ist, zur Erkennung des Endeinrichtungstyp der Endeinrichtung an den die Anzeigeinformation weitergeleitet werden soll mittels der Identifizierungsinformation dieser Endeinrichtung vor Speicherung oder Weiterleitung der Anzeigeinformation (AI; AI_{R}, AI_{F/B}) sowie zum Umsetzen und/oder Kodieren der Anzeigeinformation in Abhängigkeit der Anzeigefunktionalität des Endeinrichtungstyps.

12. System nach vorstehendem Anspruch, ferner **dadurch gekennzeichnet, dass**
die Identifizierungsinformation der zweiten Endeinrichtung (300, E_{B}) als Identifizierungsinformation einer gerufenen Endeinrichtung der Identifizierungsinformation der ersten Endeinrichtung (200, E_{A}) als rufende Endeinrichtung in der wenigstens einen Datenbank zuordenbar ist und
die wenigstens eine von der Zuordnung abhängige Anzeigeinformation (AI; AI_{R}, AI_{F/B}) als Anzeigeinformation (AI_{R}) für die zweite als gerufene Endeinrichtung speicherbar ist.

13. System nach einem der vorstehenden Ansprüche 11 bis 12, ferner **dadurch gekennzeichnet, dass**
die Identifizierungsinformation der zweiten Endeinrichtung (300, E_{B}) als Identifizierungsinformation einer rufenden Endeinrichtung, der Identifizierungsinformation der ersten Endeinrichtung (200, E_{A}) als gerufene Endeinrichtung in der ersten Datenbank zuordenbar ist und
die wenigstens eine von der Zuordnung abhängige Anzeigeinformation (AI; AI_{R}, AI_{F/B}) als Anzeigeinformation (AI_{F/B}) für die zweite als rufende Endeinrichtung speicherbar ist.

14. System nach einem der vorstehenden Ansprüche 11 bis 13, welches in Abhängigkeit der Zuordnung das Setzen eines TDP für den Nutzanschluss der ersten Endeinrichtung(200, E_{A}) bewirkt.

15. System nach vorstehendem Anspruch, ferner **gekennzeichnet, durch**
eine Vermittlungseinheit (103, V_{A}), welche auf das gesetzte TDP anspricht und unter Zusammenwirkung mit dem intelligenten Netz (110, 104) einen Übertragungskanal der zweiten Endeinrichtung (300, E_{B}) an die IP zur Übertragung der Anzeigeinformation an die zweite Endeinrichtung, (300, E_{B}) umgeleitet.

16. System nach einem der vorstehenden Ansprüche 11 bis 15, ferner **dadurch gekennzeichnet, dass**
die Nutzerschnittstelle eine graphische und/oder sprachgeführte Nutzerschnittstelle bildet.

17. System nach vorstehendem Anspruch, ferner **gekennzeichnet durch**
ein über die Nutzerschnittstelle zugreifbares Anwendungsportal (120) zur Zuordnung und Auswahl von Endeinrichtungen und Anzeigeinformationen.

18. System nach vorstehendem Anspruch, ferner **gekennzeichnet durch**
eine mit dem Portal (120) zusammenwirkende Steuerungs- oder Logikeinheit (130, 104) zum Bewirken einer Verifikation, Anpassung und/oder Speicherung ausgewählter und/oder zugeordneter Endeinrichtungen und/oder Anzeigeinformationen.

## Claims

1. Method for providing personalised display information (AI; AI_{R}, AI_{F/B}) to at least one terminal when establishing a call between at least two terminals,
wherein the display information includes acoustic and/or optical information, and wherein identifying information allocated to a first terminal (200, E_{A}) in a database (140) which can be accessed by an intelligent network (110) of the telecommunication network of the first terminal (200, E_{A}) has the identifying information of at least one second terminal (300, E_{B}) allocated thereto, and
in dependence upon the allocation, display information (AI; AI_{R}, AI_{F/B}) is stored as a data file in intelligent peripherals (140, IP) which can be accessed by the intelligent network (110) of the telecommunication network of the first terminal (200, E_{A}), wherein
when initiating the establishment of a call between at least two terminals in response to the identifying information of the first terminal (200, E_{A}), the intelligent network (110) of the telecommunication network of the first terminal (200, E_{A}) compares the identifying information of the at least one further terminal with the identifying information, allocated in the database, of the at least one second terminal (300, E_{B}), and
in response to an allocation match, the display information (AI; AI_{R}, AI_{F/B}) stored in dependence upon the allocation is retrieved from the intelligent peripherals and is forwarded to at least one of the further terminals (300, E_{B}) corresponding to the allocation,
**characterised in that**
the intelligent network is controlled with the intelligent peripherals of the network such that prior to storing or forwarding the display information (AI; AI_{R}, AI_{F/B}) the terminal type of the terminal to which the display information is to be forwarded is recognised by means of the identifying information of this terminal, and that in dependence upon the display functionality of the terminal type the display information is converted and/or encoded accordingly.

2. Method as claimed in the preceding claim, further **characterised in that**
the identifying information of the second terminal (300, E_{B}), as identifying information of a called terminal, is allocated to the identifying information of the first terminal (200, E_{A}), as a calling terminal, in the first database (140), and
the at least one item of display information (AI; AI_{R}, AI_{F/B}) depending upon the allocation is stored as display information (AI_{R}) for the second terminal, as a called terminal.

3. Method as claimed in any one of the preceding claims, further **characterised in that**
the identifying information of the second terminal (300, E_{B}), as identifying information of a calling terminal, is allocated to the identifying information of the first terminal (200, E_{A}), as a called terminal, in the first database, and
the at least one item of display information (AI; AI_{R}, AI_{F/B}) depending upon the allocation is stored as display information (AI_{F/B}) for the second terminal, as a calling terminal.

4. Method as claimed in any one of the preceding claims, further **characterised in that** in dependence upon the allocation a TDP is set for the effective connection of the first terminal (200, E_{A}).

5. Method as claimed in the preceding claim, further **characterised in that** in response to the set TDP a switching unit (103, V_{A}) of the telecommunication network reroutes a transmission channel of the second terminal (300, E_{B}) for forwarding the display information (AI; AI_{R}, AI_{F/B}) to the second terminal (300, E_{B}) to the intelligent peripherals of the intelligent network (110).

6. Method as claimed in any one of the preceding claims, further **characterised in that** for the allocation of the first and second terminals (200, E_{A}, 300, E_{B}) and/or for the selection of display information a user interface (105) connected to the intelligent network (110) is used.

7. Method as claimed in the preceding claim, further **characterised in that** access to an application portal (120) is provided via the user interface (105) for the allocation and selection of terminals and display information.

8. Method as claimed in any one of the preceding claims, further **characterised in that** prior to storing identifying information and display information (AI, AI_{R}, AI_{F/B}) identification and/or authentication in relation to the first terminal (200, E_{A}) is carried out.

9. Method as claimed in any one of the preceding claims, further **characterised in that**
the display information (AI; AI_{R}, AI_{F/B}) in the form of software is forwarded to the respective second terminal (300, E_{B}), and accordingly adapts the hardware and/or memory of each second terminal (300, E_{B}) for displaying the display information (AI; AI_{R}, AI_{F/B}).

10. Method as claimed in any one of the preceding claims, further **characterised in that** in dependence upon the display information (AI; AI_{R}, AI_{F/B}), the identifying information of the first terminal (200, E_{A}) and/or the identifying information of the second terminal (300, E_{B}) a dataset which can be allocated to the first terminal (200, E_{A}) is generated for further processing, in particular accounting.

11. System for providing personalised display information (AI; AI_{R}, AI_{F/B}), which includes acoustic and/or optical information, to at least one terminal when establishing a call between at least two terminals, with at least one user interface (105), which can be accessed via a terminal, to a database (140), which co-operates with at least one intelligent network (110), allocated to a telecommunication network (100), and the database (140) such that identifying information allocated to a first terminal (200, E_{A}) of the telecommunication network (100) can have the identifying information of at least one second terminal (300, E_{B}) allocated thereto, and
wherein in dependence upon the allocation, display information (AI; AI_{R}, AI_{F/B}) can be stored as a data file in intelligent peripherals (140, IP) which can be accessed by the intelligent network (110) of the telecommunication network of the first terminal (200, E_{A}), such that
when initiating the establishment of a call between at least two terminals in response to the identifying information of the first terminal (200, E_{A}), the intelligent network (110) compares the identifying information of the at least one further terminal with the allocated identifying information of the at least one second terminal (300, E_{B}), and in response to an allocation match, retrieves the display information (AI; AI_{R}, AI_{F/B}) stored in dependence upon the allocation from intelligent peripherals and forwards said display information to at least one of the further terminals (300, E_{B}) corresponding to the allocation,
**characterised in that**
the intelligent peripherals are formed and can be controlled by means of the intelligent network for recognising the terminal type of the terminal to which the display information is to be forwarded by means of the identifying information of this terminal prior to storing or forwarding the display information (AI; AI_{R}, AI_{F/B}), and in dependence upon the display functionality of the terminal type for converting and/or encoding the display information.

12. System as claimed in the preceding claim, further **characterised in that**
the identifying information of the second terminal (300, E_{B}), as identifying information of a called terminal, can be allocated to the identifying information of the first terminal (200, E_{A}), as a calling terminal, in the at least one database, and
the at least one item of display informations (AI; AI_{R}, AI_{F/B}) depending upon the allocation can be stored as display information (AI_{R}) for the second terminal, as a called terminal.

13. System as claimed in any one of the preceding claims 11 to 12, further **characterised in that**
the identifying information of the second terminal (300, E_{B}), as identifying information of a calling terminal, can be allocated to the identifying information of
the first terminal (200, E_{A}), as a called terminal, in the first database, and
the at least one item of display information (AI; AI_{R}, AI_{F/B}) depending upon the allocation can be stored as display information (AI_{F/B}) for the second terminal, as a calling terminal.

14. System as claimed in any one of the preceding claims 11 to 13, which, in dependence upon the allocation, sets a TDP for the effective connection of the first terminal (200, E_{A}).

15. System as claimed in the preceding claim, further **characterised by**
a switching unit (103, V_{A}) which responds to the set TDP and, co-operating with the intelligent network (110, 104), reroutes a transmission channel of the second terminal (300, E_{B}) to the IP for transmitting the display information to the second terminal (300, E_{B}).

16. System as claimed in any one of the preceding claims 11 to 15, further **characterised in that**
the user interface forms a graphical and/or voice-operated user interface.

17. System as claimed in the preceding claim, further **characterised by**
an application portal (120), which can be accessed via the user interface, for the allocation and selection of terminals and display information.

18. System as claimed in the preceding claim, further **characterised by**
a control or logic unit (130,104), co-operating with the portal (120), for verifying, adapting and/or storing selected and/or allocated terminals and/or display information.

## Revendications

1. Procédé de délivrance d'une information d'affichage personnalisée (AI ; AI_{R}, AI_{F/B}) à au moins un dispositif terminal lors d'un établissement d'appel entre au moins deux dispositifs terminaux,
dans lequel l'information d'affichage comprend des informations acoustiques et/ou visuelles, et
dans lequel, à une information d'identification attribuée à un premier dispositif terminal (200, E_{A}) dans une base de données (140) accessible via un réseau intelligent (110) du réseau de télécommunication du premier dispositif terminal (200, E_{A}), est attribuée l'information d'identification d'au moins un deuxième dispositif terminal (300, E_{B}), et,
en fonction de l'attribution dans une périphérie intelligente (140, IP) accessible via le réseau intelligent (110) du réseau de télécommunication du premier dispositif terminal (200, E_{A}), une information d'affichage (AI ; AIR, AI_{F/B}) est mémorisée en tant que fichier de données, où,
à l'initialisation d'un établissement d'appel entre au moins deux dispositifs terminaux en réaction à l'information d'identification du premier dispositif terminal (200, E_{A}) via le réseau intelligent (110) du réseau de télécommunication du premier dispositif terminal (200, E_{A}), l'information d'identification dudit au moins un autre dispositif terminal est comparée à l'information, d'identification dudit au moins un deuxième dispositif terminal (300, E_{B}) attribuée dans la base de données, et,
en réaction à une correspondance d'attribution, l'information d'affichage (AI ; AI_{R}, AI_{F/B}) mémorisée en fonction de l'attribution est appelée depuis la périphérie intelligente et transmise conformément à l'attribution à au moins un des autres dispositifs terminaux (300, E_{B}),
**caractérisé en ce que** :
le réseau intelligent est commandé avec la périphérie intelligente du réseau de telle manière qu'avant mémorisation ou transmission de l'information d'affichage (AI ; AI_{R}, AI_{F/B}), le type du dispositif terminal auquel doit être transmise l'information d'affichage est reconnu au moyen de l'information d'identification dudit dispositif terminal, et qu'en fonction de la fonctionnalité d'affichage du type de dispositif terminal, l'information d'affichage est convertie et/ou codée en conséquence.

2. Procédé selon la revendication précédente, **caractérisé en outre en ce que** :
l'information d'identification du deuxième dispositif terminal (300, E_{B}) en tant qu'information d'identification d'un dispositif terminal appelé est attribuée à l'information d'identification du premier dispositif terminal (200, E_{A}) en tant que dispositif terminal appelant dans la première base de données (140), et
ladite au moins une information d'affichage (AI ; AI_{R}, AI_{F/B}) dépendante de l'attribution est mémorisée en tant qu'information d'affichage (AIR) pour le deuxième dispositif terminal en tant que dispositif terminal appelé.

3. Procédé selon l'une des revendications précédentes, **caractérisé en outre en ce que** :
l'information d'identification du deuxième dispositif terminal (300, E_{B}) en tant qu'information d'identification d'un dispositif terminal appelant est attribuée à l'information d'identification du premier dispositif terminal (200, E_{A}) en tant que dispositif terminal appelé dans la première base de données, et
ladite au moins une information d'affichage (AI ; AI_{R}, AI_{F/B}) dépendante de l'attribution est mémorisée en tant qu'information d'affichage (AI_{F/B}) pour le deuxième dispositif terminal en tant que dispositif terminal appelant.

4. Procédé selon l'une des revendications précédentes, **caractérisé en outre en ce que** :
en fonction de l'attribution, un TDP est fixé pour la connexion utile du premier dispositif terminal (200, E_{A}).

5. Procédé selon la revendication précédente, **caractérisé en outre en ce que** :
en réaction au TDP fixé, une unité de commutation (103, V_{A}) du réseau de télécommunication redirige vers la périphérie intelligente du réseau intelligent (110) un canal de transmission du deuxième dispositif terminal (300, E_{B}) pour la transmission de l'information d'affichage (AI ; AI_{R}, AI_{F/B}) au deuxième dispositif terminal (300, E_{B}).

6. Procédé selon l'une des revendications précédentes, **caractérisé en outre en ce que** :
une interface d'utilisateur (105) en liaison avec le réseau intelligent (110) est utilisée pour l'attribution du premier et du deuxième dispositif terminal (200, E_{A}, 300, E_{B}) et/ou pour la sélection de l'information d'affichage.

7. Procédé selon la revendication précédente, **caractérisé en outre en ce que** :
l'interface d'utilisateur (105) permet l'accès à un portail d'applications (120) pour l'attribution et la sélection de dispositifs terminaux et d'informations d'affichage.

8. Procédé selon l'une des revendications précédentes, **caractérisé en outre en ce que** :
une identification et/ou une authentification sont effectuées par rapport au premier dispositif terminal (200, E_{A}) avant la mémorisation de l'information d'identification et de l'information d'affichage (AI ; AI_{R}, AI_{F/B}).

9. Procédé selon l'une des revendications précédentes, **caractérisé en outre en ce que** :
l'information d'affichage (AI ; AI_{R}, AI_{F/B}) est transmise sous forme de logiciel au deuxième dispositif terminal (300, E_{B}) et le matériel et/ou la mémoire du deuxième dispositif terminal (300, E_{B}) sont adaptés en conséquence pour l'affichage de l'information d'affichage (AI ; AI_{R}, AI_{F/B}).

10. Procédé selon l'une des revendications précédentes, **caractérisé en outre en ce que** :
en fonction de l'information d'affichage (AI ; AIR, AI_{F/B}), de l'information d'identification du premier dispositif terminal (200, E_{A}) et/ou de l'information d'identification du deuxième dispositif terminal (300, E_{B}), un enregistrement de données attribuable au premier dispositif terminal (200, E_{A}) est généré pour traitement complémentaire, en particulier comptable.

11. Système pour la délivrance d'une information d'affichage personnalisée (AI ; AI_{N}, AI_{F/B}) comprenant des informations acoustiques et/ou visuelles, à au moins un dispositif terminal lors d'un établissement d'appel entre au moins deux dispositifs terminaux, avec au moins une interface d'utilisateur (105) vers une base de données (140) accessible via un dispositif terminal,
lequel coopère avec au moins un réseau intelligent (110) attribué à un réseau de télécommunication (100) et avec la base de données (140),
de telle manière qu'à une information d'identification attribuée à un premier dispositif terminal (200, E_{A}) du réseau de télécommunication (100) est attribuable l'information d'identification d'au moins un deuxième dispositif terminal (300, E_{B}), et
où, en fonction de l'attribution dans une périphérie intelligente (140, IP) accessible via le réseau intelligent (110) du réseau de télécommunication du premier dispositif terminal (200, E_{A}), une information d'affichage (AI ; AI_{R}, AI_{F/B}) est mémorisable en tant que fichier de données,
de telle manière qu'à l'initialisation d'un établissement d'appel entre au moins deux dispositifs terminaux en réaction à l'information d'identification du premier dispositif terminal (200, E_{A}) via le réseau intelligent (110) du réseau de télécommunication du premier dispositif terminal, le réseau intelligent provoque la comparaison de l'information d'identification dudit au moins un autre dispositif terminal avec l'information d'identification attribuée dudit au moins un deuxième dispositif terminal (300, E_{B}), et
en réaction à une correspondance d'attribution, provoque l'appel de l'information d'affichage (AI ; AI_{R}, AI_{F/B}) mémorisée en fonction de l'attribution depuis la périphérie intelligente et sa transmission conformément à l'attribution à au moins un des autres dispositifs terminaux (300, E_{B}),
**caractérisé en ce que** :
la périphérie intelligente est prévue et peut être commandée avec le réseau intelligent pour reconnaître, avant mémorisation ou transmission de l'information d'affichage (AI ; AIR, AI_{F/B}) le type du dispositif terminal auquel doit être transmise l'information d'affichage au moyen de l'information d'identification dudit dispositif terminal, et pour convertir et/ou coder l'information d'affichage en fonction de la fonctionnalité d'affichage du type de dispositif terminal.

12. Système selon la revendication précédente, **caractérisé en outre en ce que** :
l'information d'identification du deuxième dispositif terminal (300, E_{B}) est attribuable, en tant qu'information d'identification d'un dispositif terminal appelé, à l'information d'identification du premier dispositif terminal (200, E_{A}) en tant que dispositif terminal appelant dans ladite au moins une base de données, et
ladite au moins une information d'affichage (AI ; AI_{R}, AI_{F/B}) dépendante de l'attribution est mémorisable en tant qu'information d'affichage (AIR) pour le deuxième dispositif terminal en tant que dispositif terminal appelé.

13. Système selon l'une des revendications précédentes 11 et 12, **caractérisé en outre en ce que** :
l'information d'identification du deuxième dispositif terminal (300, E_{B}) est attribuable, en tant qu'information d'identification d'un dispositif terminal appelé, à l'information d'identification du premier dispositif terminal (200, E_{A}) en tant que dispositif terminal appelé dans la première base de données, et
ladite au moins une information d'affichage (AI ; AI_{R}, AI_{F/B}) dépendante de l'attribution est mémorisable en tant qu'information d'affichage (AI_{F/B}) pour le deuxième dispositif terminal en tant que dispositif terminal appelant.

14. Système selon l'une des revendications précédentes 11 à 13, lequel provoque la fixation d'un TDP pour la connexion utile du premier dispositif terminal (200, E_{A}) en fonction de l'attribution.

15. Système selon la revendication précédente, **caractérisé en outre par** :
une unité de commutation (103, V_{A}) qui réagit au TDP fixé et qui, en coopérant avec le réseau intelligent (110, 104), redirige un canal de transmission du deuxième dispositif terminal (300, E_{B}) à l'IP pour la transmission de l'information d'affichage au deuxième dispositif terminal (300, E_{B}).

16. Système selon l'une des revendications précédentes 11 à 15, **caractérisé en outre en ce que** :
l'interface d'utilisateur constitue une interface d'utilisateur graphique et/ou à commande vocale.

17. Système selon la revendication précédente, **caractérisé en outre par** :
un portail d'applications (120) accessible via l'interface d'utilisateur pour l'attribution et la sélection de dispositifs terminaux et d' informations d'affichage.

18. Système selon la revendication précédente, **caractérisé en outre par** :
une unité de commande ou une unité logique (130, 104) coopérant avec le portail (120) pour déclencher une vérification, une adaptation et/ou une mémorisation de dispositifs terminaux et/ou d'informations d'affichage sélectionnées et/ou attribués.
